# EUROPEAN PATENT APPLICATION

(11) **EP 1 529 984 A2**
(43) Date of publication of application: **11.05.2005**
(21) Application number: 04026738.7
(22) Date of filing: 10.11.2004
(51) Int. Cl.: F16H 1/16, F16H 1/22, B60N 2/02

(54) **Motor with reduction mechanism and power seat motor with reduction mechanism**

(30) Priority: 10.11.2003 JP 2003379982; 02.09.2004 JP 2004255660
(71) Applicant: JIDOSHA DENKI KOGYO Co., Ltd., Yokohama-shi, Kanagawa 245-8510 (JP)
(72) Inventor: Ohashi, Yasuo, Totsuka-ku Yokohama-shi Kanagawa 245-851 (JP); Tanaka, Daisuke, Totsuka-ku Yokohama-shi Kanagawa 245-851 (JP)
(74) Representative: Reinhard - Skuhra - Weise & Partner GbR

(57) **Abstract**

A motor with a reduction mechanism, having large-diameter gears of a pair of counter gears meshing with a pair of worms formed in the vicinity of a motor shaft with the thread directions of screws oriented opposite to each other, and an output gear meshing with small-diameter gears of the counter gears, wherein a spring member is housed in a cylindrical recess provided at the back end of the motor shaft; a slide member is slidably housed in the cylindrical recess; the front end portion of the slide member is pressed to contact the inner face of the end portion of a motor case by the elastic force of the spring member; and thrust force oriented in the direction of the front end of the motor shaft is always generated in the motor shaft by the resilient force of the spring member.

## Description

### BACKGROUND OF THE INVENTION

### 1. Field of the Invention

The present invention relates to a motor with a reduction mechanism suitable for use as, for example, a wiper motor or a power window motor and to a power seat motor with a reduction mechanism for moving up and down a seat.

### 2. Related Art

There exist a vehicle seat to which a motor with a reduction mechanism of the sort mentioned above is applied and a power seat motor as shown in Fig. 8 and Fig. 9, respectively. See JP-A-2003-56674 (Fig. 1 and Fig. 5, page 1), for example.

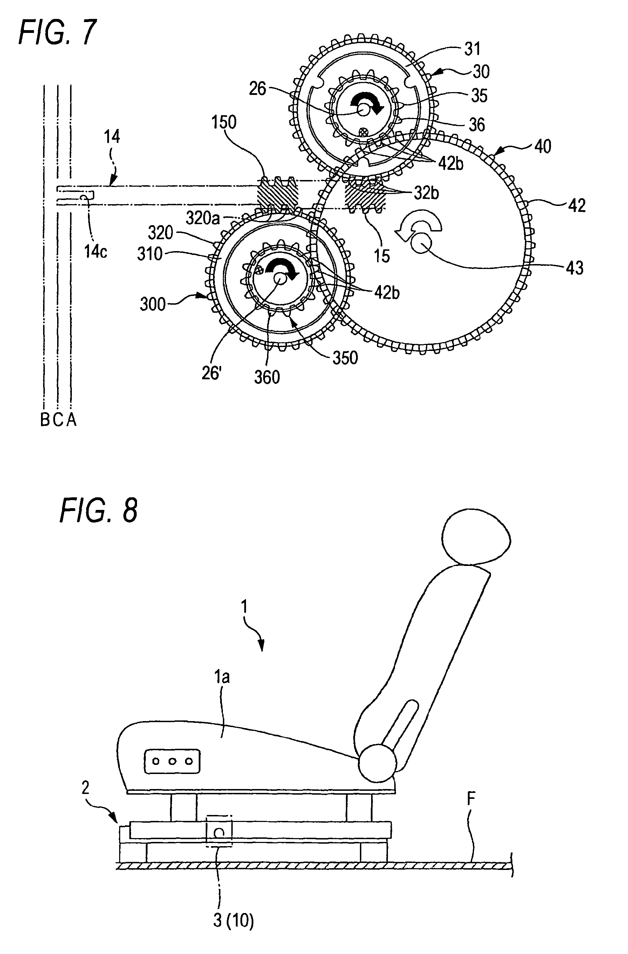

As shown in Fig. 8, a vehicle seat 1 is mounted on the floor F in the interior of a vehicle via a displacement mechanism 2 and the seat o is driven to move up and down by a power seat motor 3 used in the displacement mechanism 2.

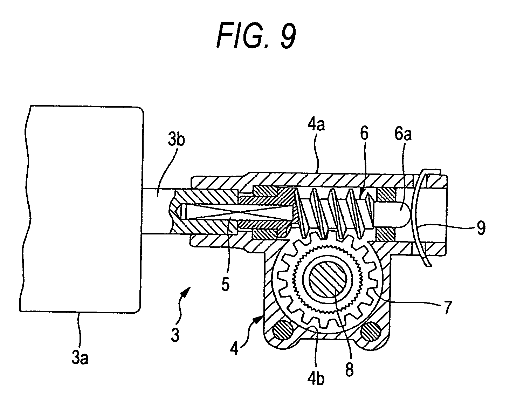

As shown in Fig. 9, the power seat motor 3 has a motor shaft 3b projecting from a motor case 3a and rotatably supported by the worm-mounting cylindrical portion 4a of a gear case 4, a worm 6 coupled to the front end portion of the motor shaft 3b via a square column-like coupling shaft 5, a worm wheel 7 rotatably supported in the worm wheel mounting recess 4b of the gear case 4 and meshing with the worm 6, an output shaft 8 concentric and integral with the worm wheel 7, and a leaf spring 9 detachably mounted in the front-end opening portion of the worm- mounting cylindrical portion 4a and used for press-urging the semispherical front end portion 6a of the worm 6 toward the motor shaft 3b.

Further, the seat elevating mechanism (not shown) of the displacement mechanism 2 is coupled to the output shaft 8. Consequently, while the motor shaft 3b is rotating forward or reversely, the forward or reverse rotation of the worm 6 and the worm wheel 7 is reduced before being transmitted to the output shaft 8, so that the seat elevating mechanism is driven to move up or down the seat 1a.

In the conventional power seat motor 3 above, it has been arrange to prevent an unusual sound (noise) from being produced between the worm 6 and the worm wheel 7 by press-urging the semispherical front end portion 6a of the worm 6 toward the motor shaft 3b with the leaf spring 9 to eliminate the play in the thrust direction of the worm 6 due to a backlash between the worm 6 and the worm wheel 7. However, because the leaf spring 9 is detachably mounted in the front-end opening portion of the worm- mounting cylindrical portion 4a, the worm-mounting cylindrical portion 4a becomes longer axially, thus making the whole body of the power seat motor 3 greater in size.

In the case of a motor with a double-reduction mechanism that has widely been used in recent years, having a pair of worms formed in the vicinity of the front end of a motor shaft with the thread directions of screws oriented opposite to each other, a pair of counter gears facing each other with the pair of worms held therebetween and respectively meshing with the pair of worms, and an output gear meshing with the pair of the counter gears, the direction of the thrust load of the motor shaft, produced by meshing the worm on one side with the counter gear on one side and the direction of the thrust load of the motor shaft produced by meshing the worm on the other side with the counter gear on the other side are oriented opposite to each other, whereby the directions thereof are canceled out each other. Consequently, the motor shaft is exempted from the play in the thrust direction even though there exist a backlash between the worm and the counter gear and a backlash between the counter gear and an output gear.

When a great fluctuation in load acts on a motor like the power seat motor with the reduction mechanism using a two-speed mechanism in particular, an unusual sound may be produced because the lateral tooth side of each tooth part is hit by a great impact force due to play resulting from a tooth-to-tooth backlash between tooth parts in each tooth intermeshing portion in a case where the load acting on a motor shaft changes from a plus load (the load hindering the reverse rotation of the motor shaft) to a minus load (the load aiding the reverse rotation of the motor shaft) as in a case where the passenger's weight is added to a seat while the seat is moving down.

### SUMMARY OF THE INVENTION

An object of the invention made to solve the foregoing problems is to provide a small-sized motor with a reduction mechanism and a power seat motor with a reduction mechanism, which motors are simple in construction and capable of preventing an unusual sound frombeing generated from each tooth intermeshing portion in a case that the motor adopts a double-reduction mechanism having an output gear meshing with each large-diameter gear of a pair of counter gears respectively meshing with a pair of worms formed on a motor shaft with the thread directions of screws oriented opposite to each other and even in a case that a great fluctuation in load acts on the motor shaft such that the load changes from one load (a plus load) hindering the rotation of the motor shaft to the other load (a minus load) aiding the rotation of the motor shaft.
(1) A motor with a reduction mechanism according to the invention, comprising:
   a shaft having an armature fixed in a vicinity of a first end of the shaft and supported in a motor case so as to be rotatable;
   a pair of worms formed in a vicinity of a second end of the shaft having opposite thread directions to each other;
   a pair of counter gears opposed to each other with respect to the shaft, each of which is provided with a large-diameter gear meshing with the corresponding worm and a smaller diameter gear concentric with the large-diameter gear so as to be integrally rotatable with the large-diameter gear; and
   an output gear meshing with the small-diameter gears so that thrust bearings for supporting both end faces of the motor shaft are not necessary;
   wherein a spring member and a slide member are housed in a recess extending in an axial direction of the shaft from an end face of the first end; and
   the slide member is urged by the spring member to contact with an inner face of the motor case so that the thrust force is always generated toward the second end of the shaft by a resilient force of the spring member.
(2) In the invention, a front end portion of the slide member may be shaped into a semisphere and a semisolid oil lubricant may be disposed between a semispherical top portion of the front end portion and the inner face of the motor case.
(3) A power seat motor with a reduction mechanism of the invention, comprises a motor shaft which has an armature fixed to the vicinity of the back end of the motor shaft and is supported in a motor case such that the motor shaft is rotatable forward or reversely, a pair of worms formed in the vicinity of the front end of the motor shaft with the thread directions of screws oriented opposite to each other, a pair of counter gears formed opposite to each other with the motor shaft held therebetween, having large-diameter gears respectively meshing with the pair of worms and small-diameter gears which are concentric with the large-diameter gears and rotate integrally with the large-diameter gears, and an output gear meshing with small-diameter gears, wherein thrust bearings for supporting both end faces of the motor shaft are not necessary; and an output shaft coupled to the output gear is driven so that a seat is moved up or down when the motor shaft is rotated forward or reversely, characterized in that: a recess is formed in the axial direction of the motor shaft from the end face of the back end of the motor shaft; a spring member elastically deformable in the axial direction of the motor shaft is housed in the recess; a slide member is slidably housed in the recess; the front end portion of the slide member is pressed to contact the inner face of the end portion of the motor case by the elastic force of the spring member; and thrust force oriented in the direction of the front end of the motor shaft is always generated in the motor shaft by the resilient force of the spring member.

As set forth above, the motor with the reduction mechanism according to the invention is configured such that the recess is formed in the axial direction of the motor shaft from the end face of the back end of the motor shaft; the spring member elastically deformable in the axial direction of the motor shaft is housed in the recess; the slide member is slidably housed in the recess; the front end portion of the slide member is pressed to contact the inner face of the end portion of the motor case by the elastic force of the spring member; and the thrust force oriented in the direction of the front end of the motor shaft is always generated in the motor shaft by the resilient force of the spring member. Consequently, even when a great fluctuation in load ranging from a plus load to a minus load acts on the motor, the lateral tooth side of each tooth part becomes free from being hit by a great impact force due to the backlash between the large-diameter gears of the pair of counter gears meshing with the pair of worms and the tooth parts of each tooth intermeshing portion of the output gear meshing with the small-diameter gears of the pair of counter gears or undergoes a largely eased impact force to ensure that even in the case of a double-reduction mechanism, a tooth-to-tooth unusual sound between the tooth parts of each tooth intermeshing portion can be eliminated by the motor simple in construction, thus making it feasible to reduce the size of the whole construction.

With the motor with the reduction mechanism, as the semisolid oil lubricant is disposed between the top portion of the semispherical front end portion and the inner face of the end portion of the motor case, the spring member and the slide member together with the motor shaft can smoothly be rotated by means of a simple construction moreover stable thrust force is applicable to the motor shaft in the direction of the front end of the armature shaft.

With the power seat motor with the reduction mechanism according to the invention, as the thrust force oriented in the direction of the front end of the motor shaft is always generated in the motor shaft, even though the minus load aiding the rotation of the motor shaft acts in the course of moving down the seat by the seat elevating mechanism, the lateral tooth side of each tooth part becomes free from being hit by a great impact force due to the backlash between the large-diameter gears of the pair of counter gears meshing with the pair of worms and the tooth parts of each tooth intermeshing portion of the output gear meshing with the small-diameter gears of the pair of counter gears or undergoes a largely eased impact force to ensure that even in the case of a double-reduction mechanism, a tooth-to-tooth unusual sound between the tooth parts of each tooth intermeshing portion can be eliminated by the motor simple in construction, thus making it feasible to reduce the size of the whole construction.

### BRIEF DESCRIPTION OF THE DRAWINGS

Fig. 1 is a plan view of a motor with a reduction mechanism according to the embodiment of the invention;
Fig. 2 is a sectional view of the motor with the reduction mechanism;
Fig. 3 is a plan view of a state in which the gear case of the motor with the reduction mechanism has been removed;
Fig. 4 is an enlarged sectional view of the principal part of the motor with the reduction mechanism;
Fig. 5 is a diagram illustrating a state in which a motor shaft for use in the motor with the reduction mechanism is unrotated;
Fig. 6 is a diagram illustrating a state in which the motor shaft for use in the motor with the reduction mechanism is rotating forward;
Fig. 7 is a diagram illustrating a state in which the motor shaft of the motor with the reduction mechanism is rotating reversely;
Fig. 8 is a schematic diagram of a vehicle seat to which a conventional motor with a reduction mechanism is applied;
Fig. 9 is a sectional view of the conventional motor with the reduction mechanism.

### DETAILED DESCRIPTION OF THE PREFERRED EMBODIMENT

An embodiment of the invention will now be described by reference to the drawings.

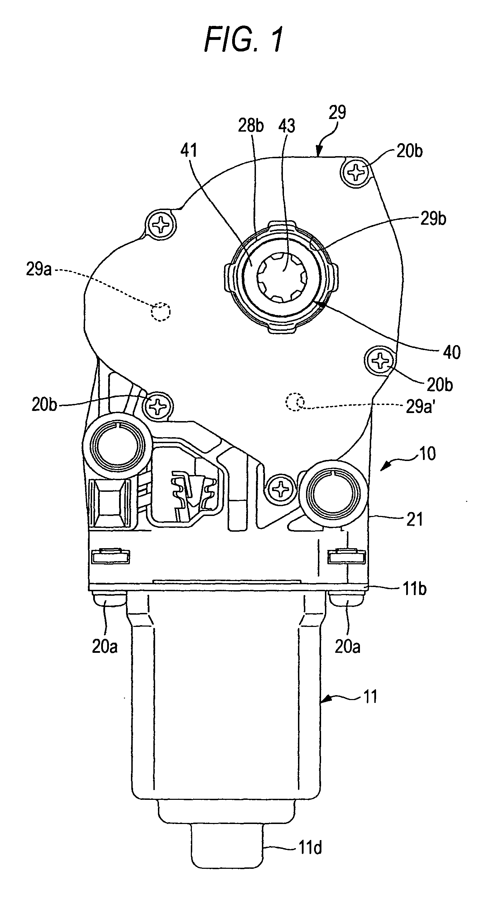

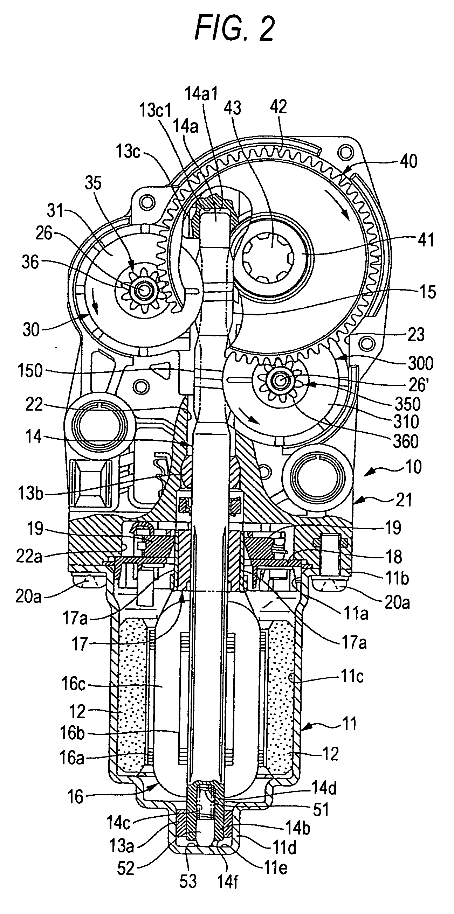

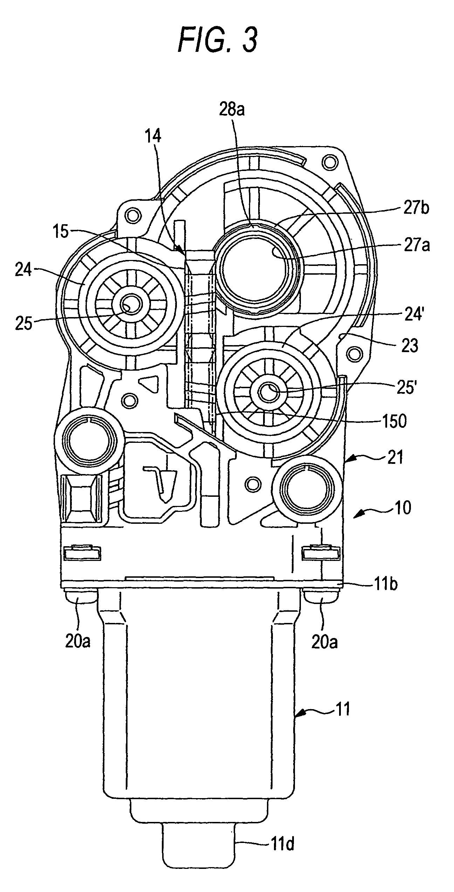

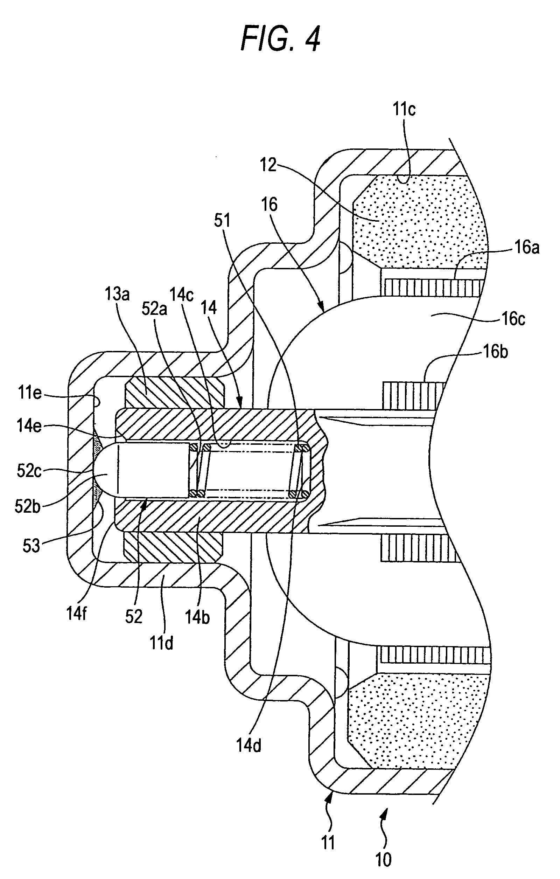

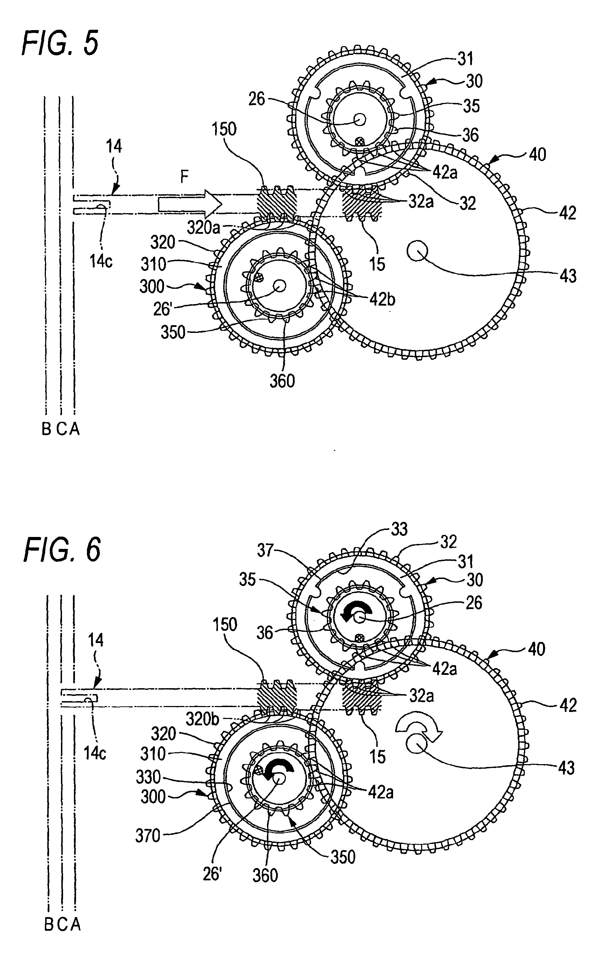

Fig. 1 is a plan view of a motor with a reduction mechanism according to the embodiment of the invention; Fig. 2, a sectional view of the motor; Fig. 3, a plan view of a state in which the gear case of the motor has been removed; Fig. 4, an enlarged sectional view of the principal part of the motor; Fig. 5, a diagram illustrating a state in which a motor shaft for use in the motor is unrotated; Fig. 6, a diagram illustrating a state in which the motor shaft for use in the motor is rotating forward; and Fig. 7, a diagram illustrating a state in which themotorshaftofthemotorisrotatingreversely. Incidentally, the vehicle seat (power seat) 1 shown in Fig. 8, presented for explaining the vehicle sheet having the conventional motor is also used for explaining the present invention.

As shown in Fig. 1, Fig. 2 and Fig. 3, a power seat motor 10 with a reduction mechanism (a motor with a reduction mechanism) has a substantially cylindrical yoke (motor case) 11 with one end side opened, and a gear case 21 with a flange portion 11b around the opening end 11a of the yoke 11 being fixedly tightened via machine screws.

As shown in Fig. 20, a pair of magnets 12 and 12 are secured to the inner peripheral face 11c of the yoke 11 with an adhesive agent or the like. Further, an armature shaft (motor shaft) 14 is rotatably supported by a radial bearing 13a fitted into a closed-end cylindrical portion 11d at the other end of the yoke 11 and radial bearings 13b and 13c fitted into the vicinity of both ends of the shaft hole 22 of the gear case 21.

The armature shaft 14 has a first worm (worm) 15 and a second worm (worm) 150 formed in the vicinity of the front end 14a of the armature shaft with the thread directions of screws oriented opposite to each other. The first worm 15 and the second worm 150 are used to form the pair of worms. An armature 16 is mounted in a position opposite to the pair of magnets 12 and 12 of the armature shaft 14. The armature 16 is fixed to the vicinity of the back end 14b of the armature shaft 14 and has an armature core 16a having coil-winding portions 16b with a predetermined number of slots and an armature coil 16c wound on the coil-winding portions 16b of the armature core 16a.

A commutator 17 is fixed to a position opposite to the boundary portion between the yoke 11 of the armature shaft 14 and the gear case 21. The commutator 17 has commutator bars 17a equal in number to the coil-winding portions 16b of the armature core 16a, and each of the commutator bars 17a is electrically connected to the armature coil 16c.

The opening end of the shaft hole 22 of the gear case 21 forms a large-diameter hole portion 22a, and a pair of brushes 19 and 19 are mounted to a position opposite to the commutator 17 in the large-diameter hole portion 22a so that the pair of brushes are brought into contact with the respective commutator bars 17a. Each of the brushes 19 is electrically connected to a motor control circuit (not shown). Switching the on-off of each switch out of a pair of switches of the motor control circuit causes an electric current to flow into the armature 16, so that the armature shaft 14 is rotated forward or reversely.

As shown in Fig. 2 and Fig. 3, the shaft hole 22 is formed substantially in the center of the gear case 21 and a depressed reduction-mechanism housing portion 23 is so formed as to communicate with the shaft hole 22. Cylindrical bosses (thrust bearings for counter gears) 24 and 24' are formed in a projected condition integrally in a predetermined position where the pair of worms 15 and 150 on the bottom wall of the reduction-mechanism housing portion 23 are sandwiched. Moreover, circular recesses 25 and 25' are formed in the center of and in the respective cylindrical bosses 24 and 24'. The lower parts of metal pin-like pivots 26 and 26' are press-fitted into the respective recesses 25 and 25'. A first counter gear (counter gear) 30 is rotatably supported by the pivot 26 and a second counter gear 300 is rotatably supported by the pivot 26'. Further, a circular hole 27a is as shown in Fig. 3 formed in a position a little to the right of the front end of the worm 15 of the bottom wall of the reduction-mechanism housing portion 23. A substantially annular rib 27b is formed in a projected condition integrally therewith around the circular hole 27a. The lower end of the cylindrical portion 41 of an output gear 40 is rotatably supported in the substantially annular rib 27b via a radial bearing 28a.

As shown in Fig. 1, further, an opening at one end of the reduction-mechanism housing portion 23 of the gear case 21 is covered with a substantially triangular platelike plastic gear case cover 29 securely tightened with machine screws 20b. Circular recesses 29a and 29a' are formed in positions opposite to the respective recesses 25 and 25' of the reduction-mechanism housing portion 23 of the gear case cover 29. The upper part of the pivot 26 is press-fitted into the recess 29a and the upper part of the pivot 26' is press-fitted into the recess 29a'. Further, a circular hole 29b is formed in a position opposite to the circular hole 27a of the reduction-mechanism housing portion 23 of the gear case cover 29. The upper end of the cylindrical portion 41 of the output gear 40 is rotatably supported in the circular hole 29b via a thrust-cum-radial bearing 28b. The pair of worms 15 and 150 and the pair of counter gears 30 and 300 and the output gear 40 are housed in the reduction-mechanism housing portion 23 of the gear case 22 to form a double-reduction mechanism.

As shown in Fig. 2, Fig. 5, Fig. 6 and Fig. 7, the first counter gear 30 is formed of a large-diameter plastic gear 31 and a first small-diameter metal gear 35 concentric with the large-diameter gear 31. A tooth part 32 meshing with the first worm 15 is formed on the outer periphery of the large-diameter gear 31 and an inside spline 33 is formed on the inner periphery of the large-diameter gear 31. Further, a tooth part 36 meshing with the tooth part 42 of the output gear 40 and an outside spline 37 meshing with the inside spline 33 of the large-diameter gear 31 are formed on the outer periphery of the first small-diameter gear 35 are integrally formed in the axial direction in a concentric, difference-in-level form. In this case, fixing the large-diameter gear 31 relatively to the first small-diameter gear 35 is made by insert molding when the large-diameter plastic gear 31 is formed by molding. Similarly, the second counter gear 300 is formed of a large-diameter plastic gear 310 and a second small-diameter metal gear 350 concentric with the large-diameter gear 310. A tooth part 320 meshing with the second worm 150 is formed on the outer periphery of the large-diameter gear 310, and the inside spline 33 is formed on the inner periphery of the large-diameter gear 310. Further, a tooth part 360 meshing with the tooth part 42 of the output gear 40 and the outside spline 37 meshing with the inside spline 33 of the large-diameter gear 310 are formed on the outer periphery of the second small-diameter gear 350 are integrally formed in the axial direction in a concentric, difference-in-level form. Inthiscase, fixing the large-diameter gear 310 relatively to the second small-diameter gear 350 is made by insert molding when the second large-diameter plastic gear 310 is formed by molding.

As shown in Fig. 2, Fig. 5, Fig. 6 and Fig. 7, an output shaft 43 is fixed in the cylindrical portion 41 of the output gear 40, and the seat elevating mechanism (not shown) of the displacement mechanism 2 of a vehicle seat 1 is coupled to a portion projected outside from the gear case 21 of the output shaft 43, whereby the seat elevating mechanism is driven to move a seat 1a up or down when the armature shaft 14 is rotated forward or reversely. In other words, the output shaft 43 coupled to the output gear 40 is driven to move up the seat 1a when the armature shaft 14 is rotated forward and to move down the seat 1a when the armature shaft 14 is rotated reversely.

As shown in Fig. 2 and Fig. 4, a cylindrical recess 14c circular in section is formed from the end face 14f of the back end 14b of the armature shaft 14 in the axial direction of the armature shaft 14, and a metal helical compression spring 51 as a spring member elastically deformable in the axial direction of the armature shaft 14 is housed in the cylindrical recess 14c, so that one end portion of the helical compression spring 51 is made to contact the base 14d of the cylindrical recess 14c, a plastic columnar slide member 52 being housed in the cylindrical recess 14c as well. The front end portion 52b of the slide member 52 is projected outside from the opening end 14e of the cylindrical recess 14 by the elastic force of the helical compression spring 51 disposed between the base 14d of the cylindrical recess 14c formed in the armature shaft 14 and the end face 52a of the back end portion of the slide member 52 and pressed to contact the base portion (inner face of the end portion of the motor case) 11e of the closed-end cylindrical portion 11d of the yoke 11, whereby the thrust force directed to the front end 14a of the armature shaft 14 is always generated in the armature shaft 14. The front end portion 52b of the slide member 52 is made semispherical in configuration and grease (semisolid oil lubricant) 53 is disposed between the top portion 52c of,the semispherical front end portion 52b and the base portion 11e of the closed-end cylindrical portion 11d.

With the power seat motor 10 including the reduction mechanism, since the large-diameter gears 31 and 310 of the pair of counter gears 30 and 300 are made to mesh with the pair of worms 15 and 150 formed in the vicinity of the front end 14a of the armature shaft 14 with the thread directions of screws oriented opposite to each other in order to make the motor shaft rotate forward or reversely, the direction of the thrust load of the armature shaft 14 oriented by causing the first worm 15 to mesh with the first counter gear 30 and the direction of the thrust load of the armature shaft 14 oriented by causing the second worm 150 to mesh with the second counter gear 301 are oriented opposite to each other and canceled out each other. Thus, thrust bearings for pivotably supporting both edges faces 14a1 and 14f of the armature shaft 14 are not necessary, so that such thrust bearings as to rotatably support the solid first counter gear 30 and the solid second counter gear 300 with precision can also be dispensed with. Moreover, play in the thrust direction of the armature shaft 14 of the motor 10 due to a backlash between the tooth parts of each tooth intermeshing portion is eliminated, so that the armature shaft 14 can smoothly be rotated forward or reversely.

As shown in Fig. 5, since the front end portion 52b of the slide member 52 is pressed to contact the base portion (inner face of the end portion of the motor case) 11e of the closed-end cylindrical portion 11d of the yoke 11 by the elastic force applied by the compression of the helical compression spring 51 housed in the cylindrical recess 14c of the armature shaft 14 while the armature shaft 14 is unrotated, the resilient force of the helical compression spring 51 allows thrust force in the direction of an arrow F that is the direction in which the front end 14a of the armature shaft 14 is oriented to always act on the armature shaft 14. Then the end face 14f of the back end 14b of the armature shaft 14 is located at a position A, so that a predetermine gap is secured between the end face 14a1 of the front end 14a of the armature shaft 14 and the base 13c1 of a radial bearing 13c. Further, a position B is a position to which the end face 14f of the back end 14b of the armature shaft 14 is movable when force opposite in direction to the direction F is applied from the outside while the armature shaft 14 is unrelated. The distance from the position A to the position B corresponds to the backlash produced in each tooth part. Even when the end face 14a1 of the front end 14a of the armature shaft 14 is moved to the position B, the distance above is set so that the end face is never brought into contact with the base portion 11e of the closed-end cylindrical portion 11d of the yoke 11.

While the armature shaft 14 is unrotated, the state in which the first worm 15 and the first counter gear 30 are meshing with each other is such that the lateral tooth side 32a on one side of the tooth part 32 of the first counter gear 30 is in contact with the first worm 15 and the state in which the second worm 150 and the second counter gear 300 are meshing with each other is such that the lateral tooth side 320a on one side of the tooth part 320 of the second counter gear 300 is in contact with the second worm 150. Further, the state in which the first small-diameter gear 35 and the output gear 40 are meshing with each other is such that the lateral tooth side 42a on one side of the tooth part 42 of the output gear 40 is in contact with the first small-diameter gear 35 and the state in which the second small-diameter gear 350 and the output gear 40 are meshing with each other is such that the lateral tooth side 42b on the other side of the tooth part 42 of the output gear 40 is in contact with the second small-diameter gear 350.

Fig. 6 illustrates a state in which the armature shaft 14 is rotating forward. The first counter gear 30, the first small-diameter gear 35, the second counter gear 300 and the second small-diameter gear 350 are rotated counterclockwise as in the direction of the arrow by rotating the armature shaft 14 forward and the output shaft 43 is also rotated clockwise as in the direction of the arrow whereby to move up the seat elevating mechanism (not shown) coupled to the output shaft 43. Then the armature shaft 14 moves to the left in Fig. 6 from the position of Fig. 5 showing the unrotated condition of the armature shaft 14 while resisting the resilient force of the helical compression spring, so that the end face 14f of the back end 14b of the armature shaft 14 moves to a position C as the midposition between the position A and the position B.

While the armature shaft 14 is rotating forward, the state in which the first worm 15 and the first counter gear 30 are meshing with each other is such that like the case where the armature shaft 14 is unrotated as shown in Fig. 5 the lateral tooth side 32a on one side of the tooth part 32 of the first counter gear 30 is in contact with the first worm 15. On the other hand, the state in which the second worm 150 and the second counter gear 300 are meshing with each other is such that unlike the case where the armature shaft 14 is unrotated as shown in Fig. 5 the lateral tooth side 320b on the other side of the tooth part 320 of the second counter gear 300 is in contact with the second worm 150. Further, the state in which the first small-diameter gear 35 and the output gear 40 are meshing with each other is such that like the where the armature shaft 14 is unrotated as shown in Fig. 5 the lateral tooth side 42a on one side of the tooth part 42 of the output gear 40 is in contact with the first small-diameter gear 35. On the other hand, the state in which the second small-diameter gear 350 and the output gear 40 are meshing with each other is such that unlike the case where the armature shaft 14 is unrotated as shown in Fig. 5 the lateral tooth side 42a on one side of the tooth part 42 of the output gear 40 is in contact with the second small-diameter gear 350.

Fig. 7 illustrates a state in which the armature shaft 14 is rotating reversely. The first counter gear 30, the first small-diameter gear 35, the second counter gear 300 and the second small-diameter gear 350 are rotated clockwise as in the direction of the arrowby rotating the armature shaft 14 reversely and the output shaft 43 is also rotated counterclockwise as in the direction of the arrow whereby to drive the seat elevating mechanism (not shown) coupled to the output shaft 43 so as to move down the seat 1a. Then the armature shaft 14 moves to the left in Fig. 7 from the position of Fig. 5 showing the unrotated condition of the armature shaft 14 while resisting the resilient force of the helical compression spring, so that the end face 14f of the back end 14b of the armature shaft 14 moves to the position C as the midposition between the position A and the position B as in the case where the armature shaft 14 is rotated forward as shown in Fig. 6.

While the armature shaft 14 is rotating reversely, the state in which the first worm 15 and the first counter gear 30 are meshing with each other is such that unlike the case where the armature shaft 14 is unrotated as shown in Fig. 5 and where the armature shaft 14 is rotated forward as shown in Fig. 6 the lateral tooth side on the other side of the tooth part 32 of the first counter gear 30 is in contact with the first worm 15. On the other hand, the state in which the second worm 150 and the second counter gear 300 are meshing with each other is such that like the case where the armature shaft 14 is unrotated as shown in Fig. 5 but unlike the case where the armature shaft 14 is rotated forward as shown in Fig. 6 the lateral tooth side 320b on the other side of the tooth part 320 of the second counter gear 300 is in contact with the second worm 150. Further, the state in which the first small-diameter gear 35 and the output gear 40 are meshing with each other is such that unlike the case where the armature shaft 14 is unrotated and unlike the case where the armature shaft 14 is rotated forward as shown in Fig. 6 the lateral tooth side 42b on the other side of the tooth part 42 of the output gear 40 is in contact with the first small-diameter gear 35. On the other hand, the state in which the second small-diameter gear 350 and the output gear 40 are meshing with each other is such that like the case where the armature shaft 14 is unrotated as shown in Fig. 5 but unlike the case where the armature shaft 14 is rotated forward as shown in Fig. 6 the lateral tooth side 42b of the tooth part 42 of the output gear 40 is in contact with the second small-diameter gear 350.

In the middle of moving down the seat 1a by rotating the output shaft 43 counterclockwise as in the direction of the arrow in Fig. 6 when the armature shaft 14 is rotated reversely to drive the seat elevating mechanism (not shown) of the displacement mechanism 2, there may occur such a phenomenon a plurality of times in one descending operation that the load acting on the armature shaft 14 changes from a load (a plus load hindering the reverse rotation of the armature shaft 14) necessary for operating the seat elevating mechanism to a so-called minus load when the weight of a passenger sitting on the seat 1a is added to the seat 1a, for example, whereby the load aiding the reverse rotation of the armature shaft 14 becomes greater than the load necessary for operating the seat elevating mechanism.

In such a state that the seat elevating mechanism (not shown) is unoperated, that is, when a switch for moving down a motor control circuit (not shown) is switched from off to on in order to move down the seat 1a by driving the seat elevating mechanism after the armature shaft 14 is set unrotated as shown in Fig. 5, the armature shaft 14 rotates reversely and is reduced to the plus load condition as shown in Fig. 7. When the load acting on the armature shaft 14 changes from the plus load condition to the minus load condition, the armature shaft 14 is reduced to an no-load condition in the course of the change. While the armature shaft 14 is in the no-load condition, the armature shaft 14 is moved to the front end 14a due to the resilient force of the helical compression spring 51, and the end face 14f of the back end 14b of the armature shaft 14 moves from the position C up to the position A and is held in the state shown in Fig. 5. In other words, the state in which the first worm 15 and the first counter gear 30 are meshing with each other is such that the tooth part 32 of the first counter gear 30 in contact with the first worm 15 shifts from the other lateral tooth side to the one lateral tooth side. As the armature shaft 14 moves in the direction of the front end 14a during the shifting operation, the one lateral tooth side 32a comes into contact with the first worm 15 while the other lateral tooth side 32b is kept in contact with the first worm 15, so that these lateral tooth sides are prevented from colliding with each other by a great impact force. Consequently, no unusual sound is generated between the first worm 15 and the tooth part 32 of the first counter gear 30. While the first small-diameter gear 35 is meshing with the output gear 40, though the tooth part 42 of the output gear 40 in contact with the first small-diameter gear 35 moves from the other lateral tooth side 42b to the one lateral tooth side 42a, no unusual sound is not generated between the first small-diameter gear 35 and the tooth part 42 of the output gear 40 likewise. On the other hand, the state in which the second worm 150 and the second counter gear 300 are meshing with each other and the state in which the second small-diameter gear 350 and the output gear 40 are meshing with each other remain unchanged as shown in Fig. 7. In other words, the one lateral tooth side 320a of the tooth part 320 of the second counter gear 300 is in contact with the second worm 150, whereas the other lateral tooth side 42b of the tooth part 42 of the output gear 40 is in contact with the small-diameter gear 350.

The armature shaft 14 changes from the no-load condition to the minus load condition; the minus load condition is similar to the state in which the armature shaft 14 is rotating forward, whereupon the armature shaft 14 is moved in the direction of the back end 14b and the end face 14f of the back end 14b of the armature shaft 14 moves from the position A up to the position C and is held in the state shown in Fig. 6. The state in which the first worm 15 and the first counter gear 30 are meshing with each other and the state in which the first small-diameter gear 35 and the output gear 40 are meshing with each other remain unchanged. The one lateral tooth side 32a of the tooth part 32 of the first counter gear 30 is kept in contact with the first worm 15, and the one lateral tooth side 42a of the tooth part 42 of the output gear 40 is kept in contact with the first small-diameter gear 35. On the other hand, with respect to the state in which the second worm 150 and the second counter gear 300 are meshing with each other, the tooth part 320 of the second counter gear 300 in contact with the second worm 150 shifts from the one lateral tooth side 320a to the other lateral tooth side 320b and with respect to the state in which the second small-diameter gear 350 and the output gear 40 are meshing with each other, the tooth part 42 of the output gear 40 in contact with the second small-diameter gear 350 shifts from the other lateral tooth side 42b to the one lateral tooth side 42a.

In the course of the change from the no-load condition to the minus load condition of the armature shaft 14, the thrust force is acting on the armature shaft 14 in the direction of the arrow F as shown in Fig. 5 due to the resilient force of the helical compression spring 51. When the tooth part 320 of the second counter gear 300 in contact with the second worm 150 shifts from the one lateral tooth side 320a to the other lateral tooth side 320b, the helical compression spring 51 generating the thrust force in the direction of the arrow F functions as a damper, so that the other lateral tooth side 320b is prevented from colliding with the second worm 150 by a great impact force. When the tooth part 42 of the output gear 40 in contact with the second small-diameter gear 350 shifts from the other lateral tooth side 42b to the one lateral tooth side 42a, moreover, the one lateral tooth side 42a is prevented from colliding with the second small-diameter gear 350 by a great impact force likewise. Consequently, the lateral tooth side of each tooth intermeshing portion becomes free from being hit by a great impact force due to the backlash between the tooth parts of each tooth intermeshing portion or undergoes a largely eased impact force, so that no unusual sound is generated between the tooth parts of each tooth intermeshing portion.

A description will now be given of a case where the load acting on the armature shaft 14 changes from the minus load condition to the plus load condition in the course of moving down the seat 1a next. When the load changes from the minus load condition to the plus load condition, the armature shaft 14 is in a no-load condition during the course above. In the no-load condition of the armature shaft 14, the armature shaft 14 is moved in the direction of the front end 14a due to the resilient force of the helical compression spring 51 and the end face 14f of the back end 14b of the armature shaft 14 moves from the position C up to the position A and is held in the state shown in Fig. 5. In other words, the state in which the first worm 15 and the first counter gear 30 are meshing with each other and the state in which the first small-diameter gear 35 and the output gear 40 are meshing with each other remain unchanged. Then the one lateral tooth side 32a of the tooth part 32 of the first counter gear 30 remains in contact with the first worm 15, and the one lateral tooth side 42a of the tooth part 42 of the output gear 40 remains in contact with the first small-diameter gear 35. On the other hand, the state in which the second worm 150 and the second counter gear 300 are meshing with each other is such that the tooth part 320 of the second counter gear 300 in contact with the second worm 150 shifts from the other lateral tooth side 320b to the one lateral tooth side 320a. As the armature shaft 14 moves in the direction of the front end 14a during the shifting operation, the one lateral tooth side 32a comes into contact with the first worm 15 while the other lateral tooth side 32b is kept in contact with the first worm 15, so that these lateral tooth sides are prevented from colliding with each other by a great impact force. Consequently, no unusual sound is generated between the first worm 15 and the tooth part 32 of the first counter gear 30. Further, the state in which the second small-diameter gear 350 and the output gear 40 are meshing with each other is such that the tooth part 42 of the output gear 40 in contact with the second small-diameter gear 350 shifts from the one lateral tooth side 42a to the other lateral tooth side 42b, so that no unusual sound is generated between the first small-diameter gear 35 and the tooth part 42 of the output gear 40 like wise.

The armature shaft 14 changes from the no-load condition to the plus load condition; the plus load condition is similar to the state in which the armature shaft 14 is rotating reversely, whereupon the armature shaft 14 is moved in the direction of the back end 14b and the end face 14f of the back end 14b of the armature shaft 14 moves from the position A up to the position C and is held in the state shown in Fig. 7. The state in which the second worm 150 and the second counter gear 300 are meshing with each other and the state in which the second small-diameter gear 350 and the output gear 40 are meshing with each other remain unchanged. The one lateral tooth side 320a of the tooth part 320 of the second counter gear 300 is kept in contact with the second worm 150, and the other lateral tooth side 42b of the tooth part 42 of the output gear 40 is kept in contact with the second small-diameter gear 350. On the other hand, with respect to the state in which the first worm 15 and the first counter gear 30 are meshing with each other, the tooth part 32 of the first counter gear 30 in contact with the first worm 15 shifts from the one lateral tooth side 32a to the other lateral tooth side 32b and with respect to the state in which the first small-diameter gear 35 and the output gear 40 are meshing with each other, the tooth part 42 of the output gear 40 in contact with the first small-diameter gear 35 shifts from the one lateral tooth side 42a to the other lateral tooth side 42b.

In the course of the change from the no-load condition to the plus load condition of the armature shaft 14, the thrust force is acting on the armature shaft 14 in the direction of the arrow F as shown in Fig. 5 due to the resilient force of the helical compression spring 51. When the tooth part 32 of the first counter gear 30 in contact with the first worm 15 shifts from the one lateral tooth side 32a to the other lateral tooth side 32b, the helical compression spring 51 generating the thrust force in the direction of the arrow F functions as a damper, so that the other lateral tooth side 32b is prevented from colliding with the second worm 15 by a great impact force. When the tooth part 42 of the output gear 40 in contact with the first small-diameter gear 35 shifts from the one lateral tooth side 42a to the other lateral tooth side 42b, moreover, the other lateral tooth side 42b is prevented from colliding with the first small-diameter gear 35 by a great impact force likewise. Consequently, the lateral tooth side of each tooth intermeshing portion becomes free from being hit by a great impact force due to the backlash between the tooth parts of each tooth intermeshing portion or undergoes a largely eased impact force, so that no unusual sound is generated between the tooth parts of each tooth intermeshing portion.

As set forth above, the front end portion 52b of the slide member 52 is pressed to contact the base portion 11e of the yoke 11 by the elastic force of the helical compression spring 51 housed in the cylindrical recess 14c of the armature shaft 14 and the thrust force in the direction of the front end 14a of the armature shaft 14 is always generated by the resilient force of the helical compression spring 51. Therefore, even though the minus load condition occurs a plurality of times in one descending operation in the course of moving down the seat 1a by the seat elevating mechanism, the lateral tooth side of each tooth part becomes free from being hit by a great impact force due to the backlash between the large-diameter gears 31 and 310 of the pair of counter gears 30 and 300 meshing with the pair of worms 15 and 150 and the tooth parts of each tooth intermeshing portion of the output gear 40 meshing with the small-diameter gears 35 and 350 of the pair of counter gears 30 and 300 or undergoes a largely eased impact force to ensure that even in the case of the double-reduction mechanism, a tooth-to-tooth unusual sound between the tooth parts of each tooth intermeshing portion can be eliminated by the motor simple in construction.

As it has been arranged that the helical compression spring 51 and the slide member 52 are housed in the cylindrical recess 14c formed in the back end 14b of the armature shaft 14, the helical compression spring 51 and the slide member 52 are not substantially projected outside, whereby the whole power seat motor can be reduced in size. Further, as grease is disposed between the top portion 52c of the semispherical front end portion 52b of the slide member 52 and the base portion 11e of the yoke 11, the helical compression spring 51 and the slide member 52 together with the armature shaft 14 are made rotatable smoothly by a simple construction provided so that the helical compression spring 51 and the slide member 52 are housed in the cylindrical recess 14c formed at the back end 14b of the armature shaft 14 and moreover stable thrust force is applicable to the armature shaft 14 in the direction of the front end 14a of the armature shaft 14.

Although the motor with the reduction mechanism has been described as a power seat motor with a reduction mechanism for a motor vehicle according to the embodiment of the invention, the embodiment thereof is needless to say applicable any other motor such as wiper motors and power window motors with a reduction mechanism.

## Claims

1. A motor with a reduction mechanism, comprising:
a shaft having an armature fixed in a vicinity of a first end of the shaft and supported in a motor case so as to be rotatable;
a pair of worms formed in a vicinity of a second end of the shaft having opposite thread directions to each other;
a pair of counter gears opposed to each other with respect to the shaft, each of which is provided with a large-diameter gear meshing with the corresponding worm and a smaller diameter gear concentric with the large-diameter gear so as to be integrally rotatable with the large-diameter gear; and
an output gear meshing with the small-diameter gears;
wherein a spring member and a slide member are housed in a recess extending in an axial direction of the shaft from an end face of the first end; and
the slide member is urged by the spring member to contact with an inner face of the motor case so that the thrust force is always generated toward the second end of the shaft by a resilient force of the spring member.

2. A motor with a reduction mechanism according to claim 1, wherein a front end portion of the slide member is shaped into a semisphere and wherein a semisolid oil lubricant is disposed between a semispherical top portion of the front end portion and the inner face of the motor case.

3. A power seat motor with a reduction mechanism, comprising:
a shaft having an armature fixed in a vicinity of a first end of the shaft and supported in a motor case so as to be rotatable;
a pair of worms formed in a vicinity of a second end of the shaft having opposite thread directions to each other;
a pair of counter gears opposed to each other with respect to the shaft, each of which is provided with a large-diameter gear meshing with the corresponding worm and a smaller diameter gear concentric with the large-diameter gear so as to be integrally rotatable with the large-diameter gear;
an output gear meshing with the small-diameter gears; and
an output shaft coupled to the output gear, the output shaft being driven so that a seat is moved up or down when the shaft is rotated forward or reversely,
wherein a spring member and a slide member are housed in a recess extending in an axial direction of the shaft from an end face of the first end; and
the slide member is urged by the spring member to contact with an inner face of the motor case so that the thrust force is always generated toward the second end of the shaft by a resilient force of the spring member.
